# EUROPÄISCHE PATENTANMELDUNG

(11) **EP 1 990 554 A1**
(43) Veröffentlichungstag der Anmeldung: **12.11.2008**
(21) Anmeldenummer: 08008781.0
(22) Anmeldetag: 09.05.2008
(51) Int. Cl.: F16C 19/54, F16C 33/60, F16C 33/66

(54) **Abschmierbare Mehrfachlagerung**

(30) Priorität: 11.05.2007 DE 102007022163
(71) Anmelder: Aschenbrenner, Martin, 85462 Eitting (DE)
(72) Erfinder: Aschenbrenner, Martin, 85462 Eitting (DE)
(74) Vertreter: Ruschke, Hans Edvard

(57) **Zusammenfassung**

Nachschmierbare Mehrfach-Wälzlagerung mit mindestens zwei Reihen von Wälzlagerkörpern, die in einem Innenring und einem Außenring gelagert sind und zur Verwendung bei sich drehenden Körpern vorgesehen sind,
gekennzeichnet durch
mindestens zwei einreihige Standard-Wälzlager nebeneinander,
die voneinander axial getrennt sind durch separat hergestellte Drehteile in Gestalt eines äußeren und eines inneren Distanz- und Abdeckringes (7, 7b bzw. 8 bzw. 8b), von denen einer zusätzlich mit einer randständigen umlaufenden Fettförderkammer (10) in Gestalt einer Ausdrehung an einer Umfangsfläche davon ausgebildet ist,
wobei von der Fettförderkammer (10) ausgehend wenigstens eine radial zum Ringspalt (20) zwischen dem äußeren und inneren Distantz- und Abdeckring (7,7b bzw. 8,8b) hin verlaufende Durchlassbohrung (9) vorgesehen ist.

## Beschreibung

Die vorliegende Erfindung betrifft abschmierbare Mehrfachlagerungen in Gestalt von Wälzlagern zur Verwendung bei drehenden Körpern wie Wälzkörpern, bei Bandförderern von Rotationsfalzanlagen für Druckmaschinen und bei Transport- und Fördersystemen etc., wie sie im wesentlichen im Oberbegriff des Patentanspruchs 1 angesprochen sind. Ähnliche Lagerungen für Bandrollen sind aus dem Gebrauchsmuster 202 07 421.8 des Anmelders vom 10.05.2002 bekannt, und im übrigen auch in etwa aus dem DE-Gbm 20 2006 008 775.3 vom 2.6.2006, das am 31.8.2006 eingetragen wurde.

Im Stand der Technik gibt es vielfach Mehrfachlagerungen (von sich drehenden Körpern) in Gestalt von Wälzlagern, etwa Doppelrillen-Kugellager, die je nach Anwendungs- u. Belastungsfall in verschiedenen Größen zum Einsatz kommen und zur Verbesserung der Laufleistung häufig mit einer Fettschmierung versehen oder sogar nachfettbar ausgeführt sein müssen. Bei der Wartung von technischen Anlagen mit solchen Mehrfachlagerungen müssen gelegentlich die abschmierbaren, doppelt oder dreifach ausgeführten Wälz- oder Kugellager ausgetauscht werden, weil sie defekt geworden sind oder ihre maximale Lebensdauer erreicht haben.

Solche Doppel- und Dreifachlager haben breite Laufringe innen und außen, die mit entsprechend vielen Laufbahnen versehen sein müssen, und sind demzufolge hochwertige Präzisionsteile, die häufig nur in bestimmten Sondergrößen auf dem Markt erhältlich und entsprechend teuer sind, zumal wenn sie nachfettbar sei müssen.

Hiernach ist es die der vorliegenden Erfindung zugrunde liegende Aufgabe, eine gattungsgemäße abschmierbare Mehrfachlagerung derart weiterzubilden, dass die Wartungs- und Reparaturkosten dieser Lager deutlich sinken, ohne dass die Funktionalität der Mehrfachlagerung leidet.

Diese Aufgabe wird erfindungsgemäß durch Merkmale des Patentanspruches 1 gelöst. Vorteilhafte weitere Ausgestaltungen dieser Lösung ergeben sich aus den Unteransprüchen.

Der neue und erfinderische Aspekt ist in der Anordnung von mindestens zwei einreihigen Standard-Wälzlagern nebeneinander und in der Hinzufügung des inneren Distanz- und Schmierringes 8 mit der Fettförderkammer 10 im Zusammenhang mit dem äußeren Distanz- und Abdeckring 7 bei der ansonsten unveränderten Lagerung zu sehen.

Durch den Einsatz von in der Massenfertigung hergestellten und somit recht preiswerten Standard-Wälzlagern in Verbindung mit höchst einfach herzustellenden Drehteilen (als dazwischen angeordnete Zusatzteile) gelingt es, die Wartungs- und Renovierungskosten bei den in Rede stehenden abschmierbaren Mehrfachlagerungen signifikant zu senken. Dies gilt um so mehr, wenn die gewartete Anlage viele dieser Mehrfachlagerungen hat.

Mehrere Ausführungsformen der vorliegenden Erfindung werden unter Bezugnahme auf die beigefügten Zeichnungen erläutert. Darin zeigt:
- Figur 1a:: Nachschmierbare Doppellagerung mit diagonaler Schmierbohrung an der Festlagerseite
- Figur 1b:: Nachschmierbare Doppellagerung mit diagonaler Schmierborung an der Loslagerseite
- Figur 2a:: Nachschmierbare Doppellagerung mit axialer und radialer Schmierbohrung an der Festlagerseite
- Figur 2b:: Nachschmierbare Doppellagerung mit axialer und radialer Schmierbohrung an der Loslagerseite
- Figur 3a:: Nachschmierbare Dreifachlagerung mit doppelter diagonaler Schmierbohrung an der Festlagerseite
- Figur 3b:: Nachschmierbare Dreifachlagerung mit doppelter diagonaler Schmierbohrung an der Loslagerseite
- Figur 4a: Nachschmierbare Dreifachlagerung mit axialer und doppelter radialer Schmierbohrung an der Festlagerseite
- Figur 4b: Nachschmierbare Dreifachlagerung mit axialer und doppelter radialer Schmierbohrung an der Loslagerseite

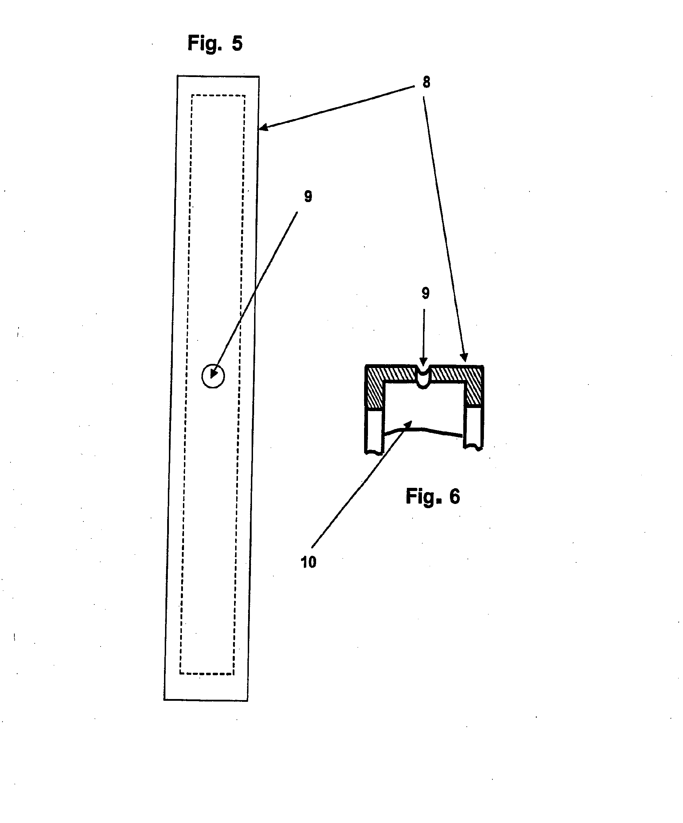

- Figur 5:: Innerer Distanz- und Schmierring (Draufsicht)
- Figur 6:: Innerer Distanz- und Schmierring (Querschnitt an der Durchlassbohrung)

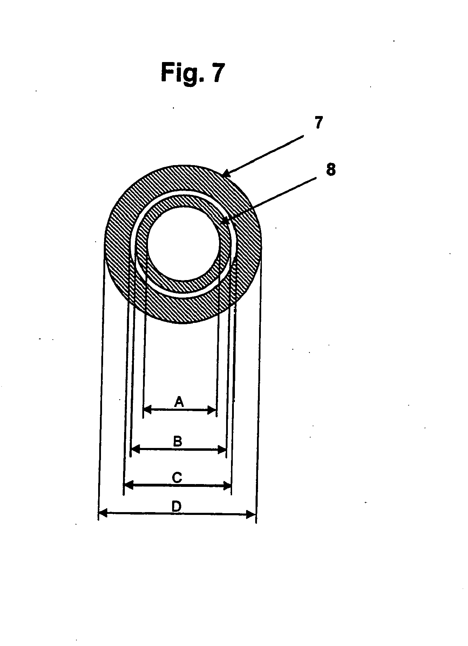

- Figur 7:: Maß- und Toleranzzeichnung äußerer Distanz- und Abdeckring, sowie innerer Distanz- und Schmierring
- Figur 8:: Äußerer Schutzdeckel (Draufsicht von Lagerseite)
- Figur 9:: Äußerer Schutzdeckel (Querschnitt)
- Figur 10a:: Nachschmierbare Doppellagerung mit radialer Schmierbohrung in feststehendem Lagergehäuse und drehender Achse an der Festlagerseite.
- Figur 10b:: Nachschmierbare Doppellagerung mit radialer Schmierbohrung in feststehendem Lagergehäuse und drehender Achse an der Loslagerseite.
- Figur 11a:: Nachschmierbare Dreifachlagerung mit radialen Schmierbohrungen in feststehendem Lagergehäuse und drehender Achse an der Festlagerseite.
- Figur 11b:: Nachschmierbare Dreifachlagerung mit radialen Schmierbohrungen in feststehendem Lagergehäuse und drehender Achse an der Loslagerseite.
- Figur 12a:: Nachschmierbare Dreifachlagerung mit diagonalen Schmierbohrungen in feststehendem Lagergehäuse und drehender Achse an der Festlagerseite.
- Figur 12b:: Nachschmierbare Dreifachlagerung mit diagonalen Schmierbohrungen in feststehendem Lagergehäuse und drehender Achse an der Loslagerseite.
- Figur 13:: Äußerer Distanz-, Schmier- und Abdeckring (Draufsicht)
- Figur 14:: Äußerer Distanz-, Schmier- und Abdeckring (Querschnitt an der Durchlassbohrung)

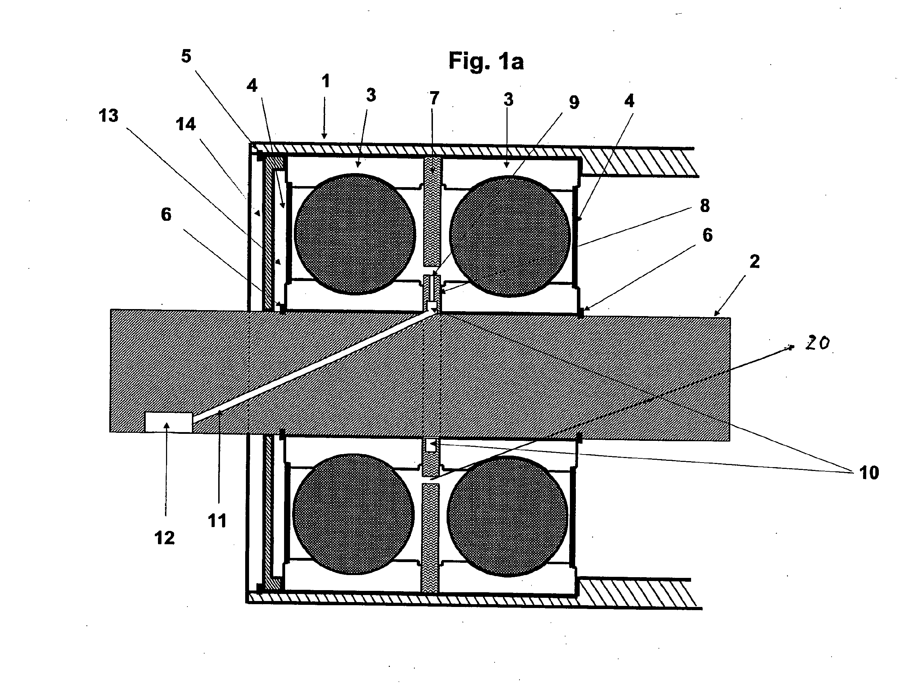

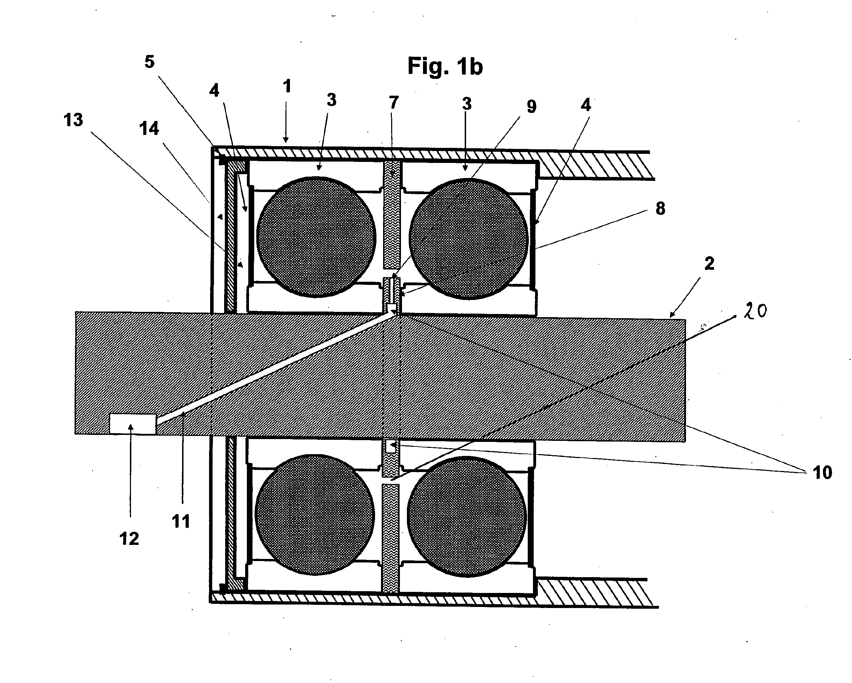

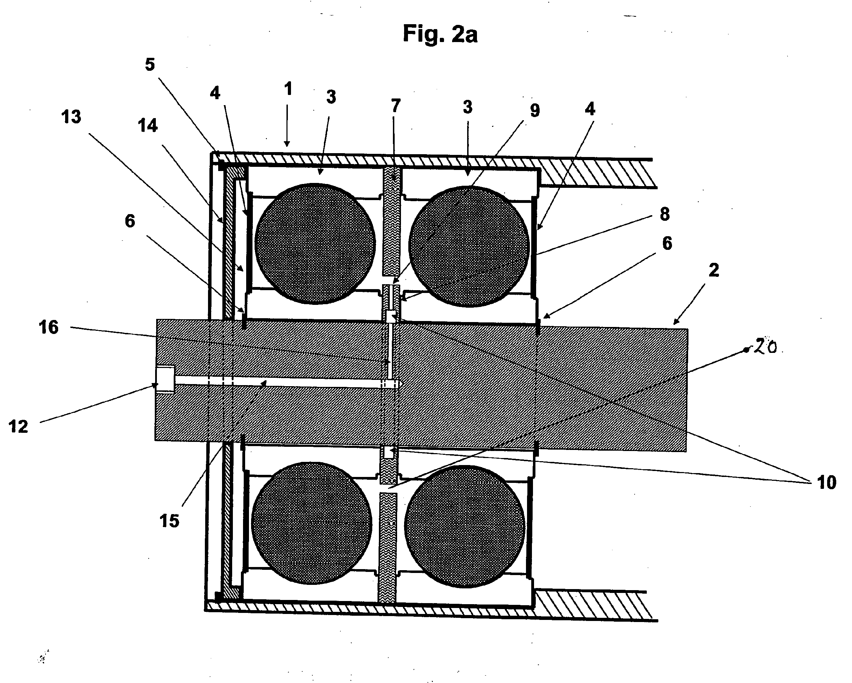

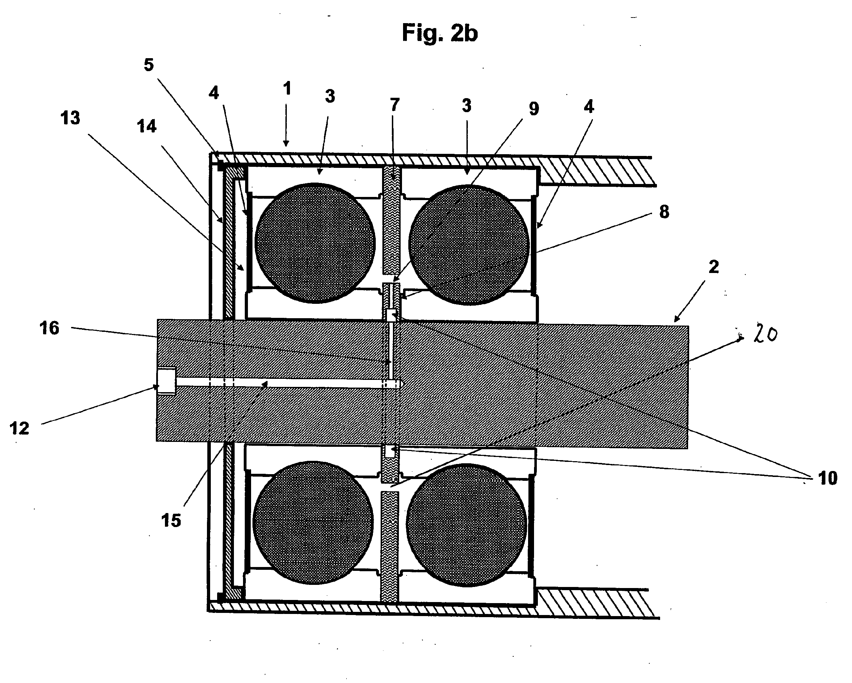

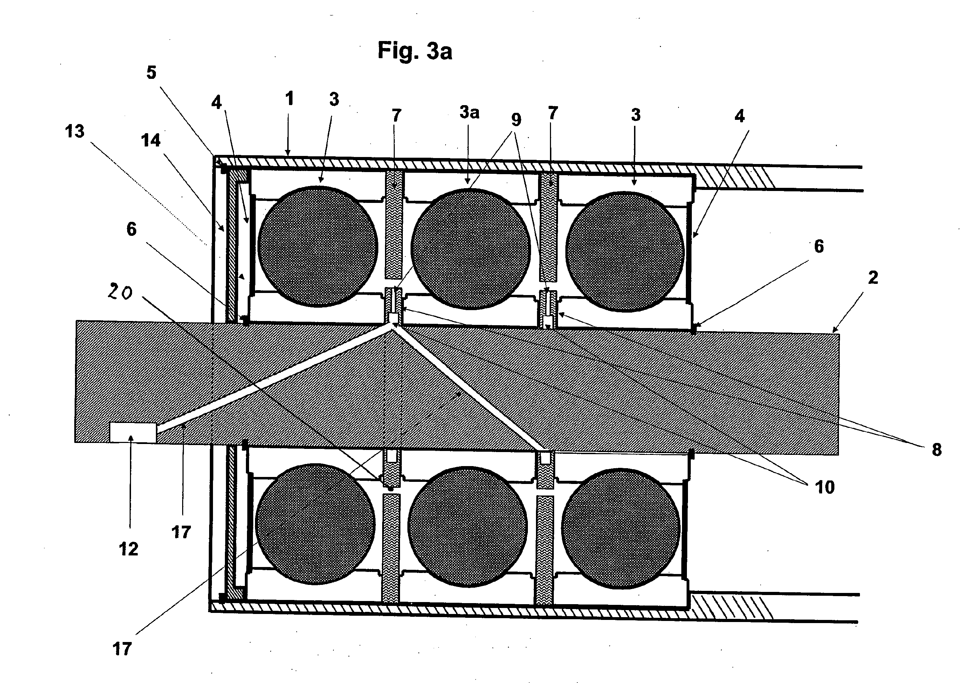

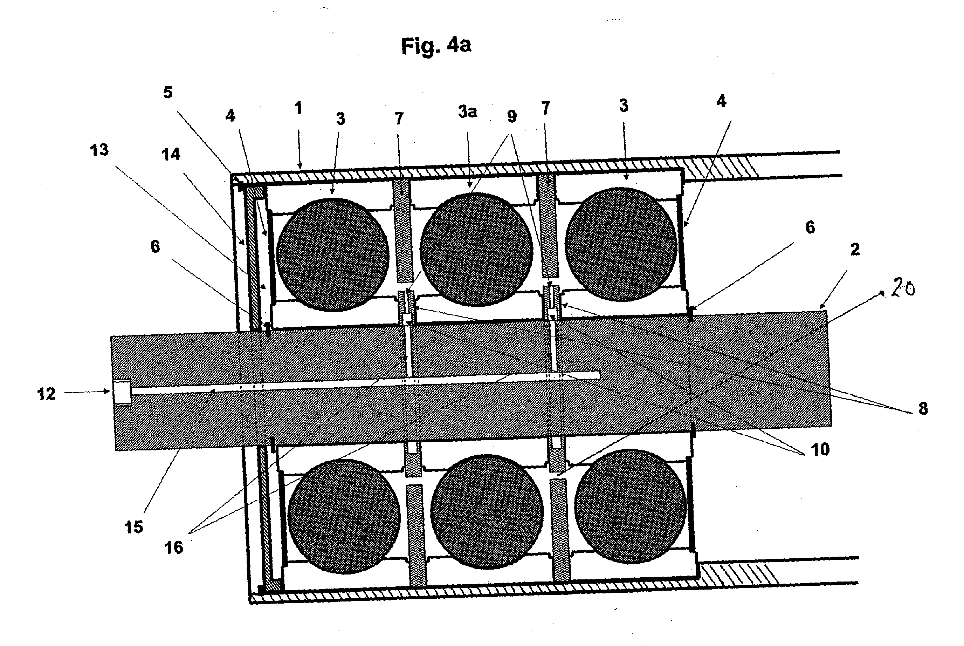

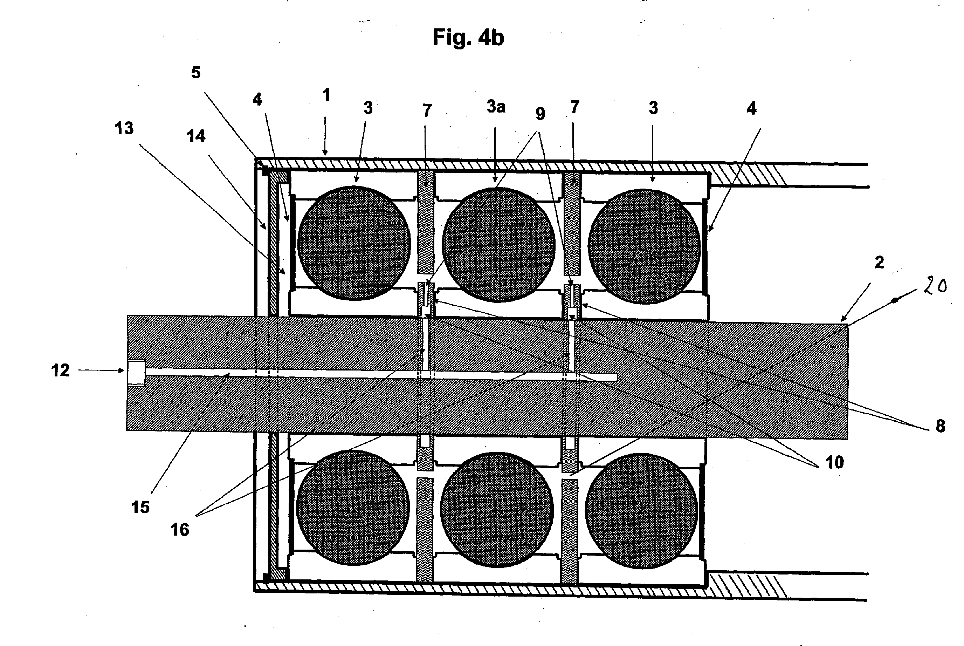

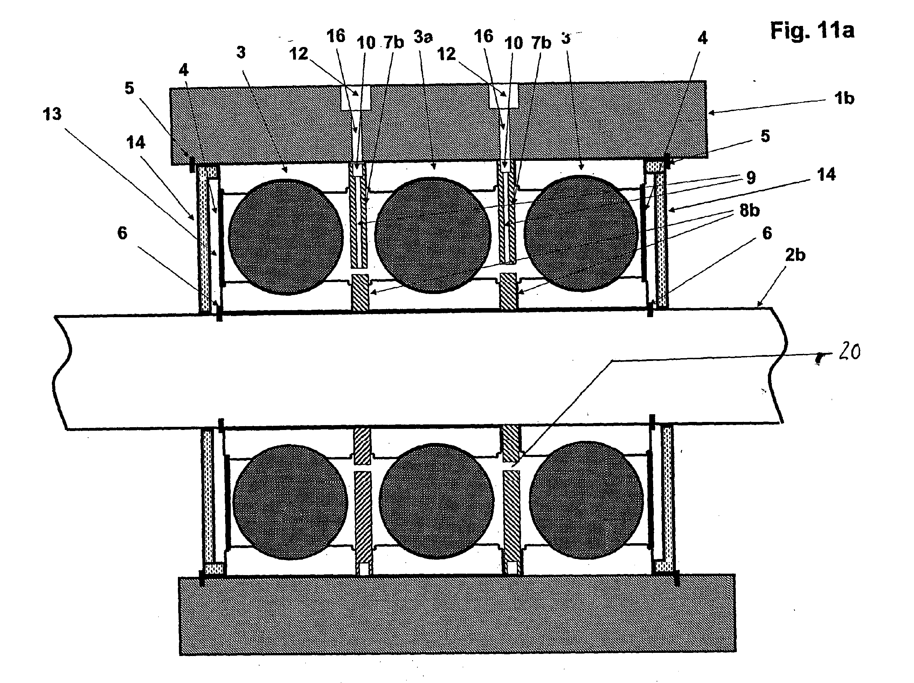

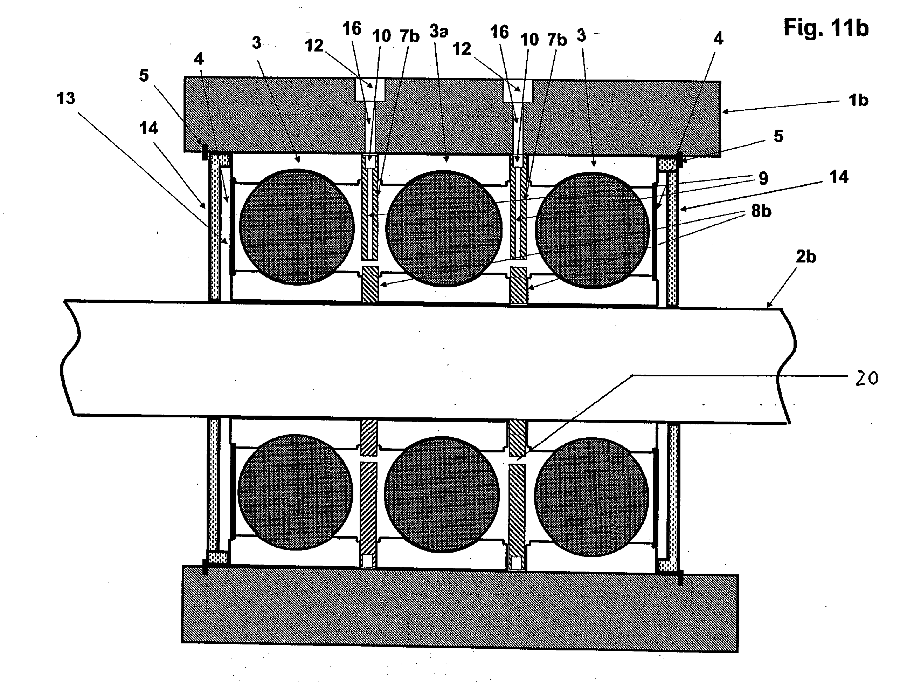

Die nachschmierbare Mehrfachlagerung besteht aus mindestens zwei einseitig geschlossenen Rillenkugellagern von herkömmlichem einreihigem Aufbau (Figuren 1a / 1b / 2a / 2b / 10a / 10b). Der Aufbau dieser Lagerung kann auch als Dreifach- oder Mehrfachlagerung aus entsprechend vielen Standardkugellagern ausgeführt sein (Figuren 3a / 3b / 4a / 4b / 11a / 11b / 12a / 12b).

Zwischen jeweils zwei einfachen Rillenkugellagern befindet sich der neuartige äußere Distanz- und Abdeckring 7 und damit zusammenwirkend der ebenfalls neuartige innere Distanz- und Schmierring 8. Der äußere Distanz- und Abdeckring 7 hat nicht nur eine Distanzfunktion in axialer Richtung zwischen beiden Lagern, sondern ist in seiner radial einwärts verlaufenden Erstreckung auch so bemessen, dass er die Kugellager weitgehend so gegeneinander abdeckt, dass das Fett durch Fliehkräfte nicht aus dem Lager jeweils in das benachbarte Lager geschleudert werden kann. Dies bedeutet, dass der Ringspalt 20 zwischen dem inneren Distanz- und Schmierring 8 bzw. 8b und dem äußeren Ring 7, 7b in der Nähe der Lauffläche des inneren Laufringes der Rillenkugellager liegt. Der innere Distanz- und Schmierring 8 ist im übrigen mit einer umlaufend eingefrästen Nut 10 an der Achsseite und davon ausgehend mit mindestens einer radial sich erstreckenden Durchlassbohrung 9 versehen. Diese Nut 10 wird als Fettförderkammer bezeichnet. Die Breite des äußeren Distanz- und Abdeckringes 7 und des inneren Distanz- und Schmierringes 8 in axialer Richtung variiert je nach Lagergröße. Der Durchmesser des inneren Distanz- und Schmierringes 8 ist so bemessen, dass der Außendurchmesser immer um 1,0 mm größer ist als der Außendurchmesser des inneren Ringes des Rillenkugellagers. Der äußere Distanz- und Abdeckring 7 und der innere Distanz- und Schmierring 8 sind im Durchmesser so aufeinander abgestimmt, dass nach der Montage dazwischen ein umlaufender Ringspalt 20 von 0,5 mm entsteht. Durch diesen Spalt gelangt das Fett aus der Fettförderkammer 10 durch die radiale Durchlassbohrung 9 und den vorgenannten umlaufenden Spalt in die beiden herkömmlichen Kugellager.

Der Aufbau der Lagerung durch jeweils zwei oder mehrere Kugellager an der Fest- und Loslagerseite (Figuren 1a / 1b / 2a / 2b / 3a / 3b / 4a / 4b / 10a / 10b / 11a / 11b / 12a / 12b) führt zu einer wesentlich erhöhten Lebensdauer der Lagerung, da sich die Last von Radial- und Axialkräften erheblich besser verteilt. Des weiteren ergibt sich aus dieser Bauweise eine erhebliche Kostenreduzierung, da hier herkömmliche, einseitig geschlossene Rillenkugellager zum Einsatz kommen können, und zwar im Gegensatz zu bisherigen Lösungen, bei denen erheblich teurere abschmierbare Doppelrillenkugellager verwendet werden.

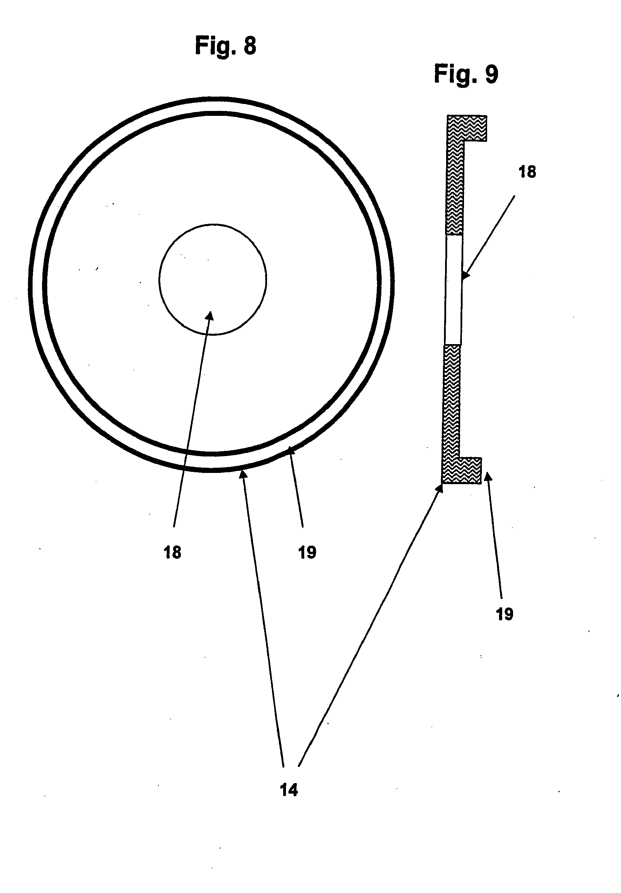

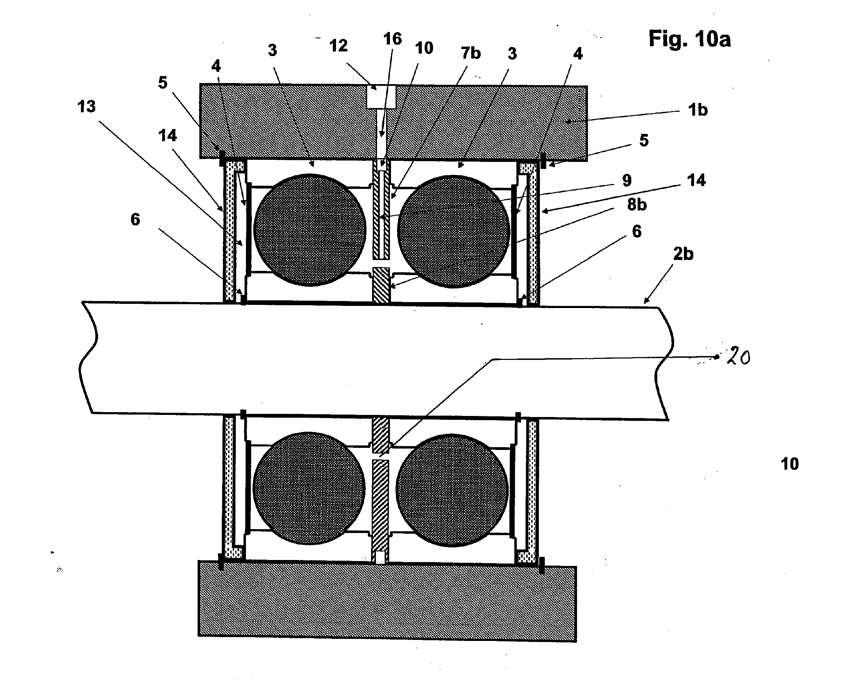

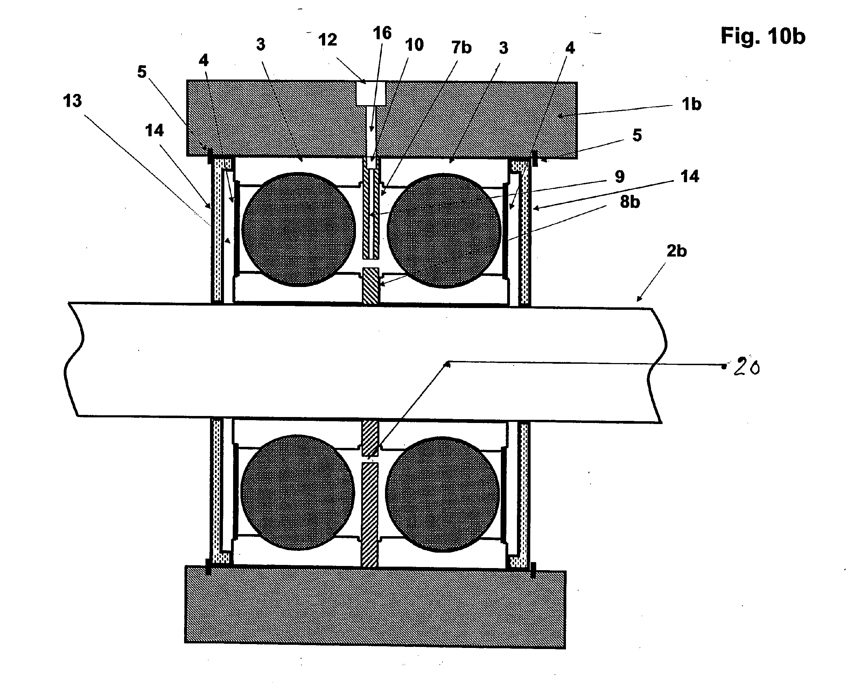

Die Abdeckung der Lagerung nach Außen erfolgt durch den äußeren Schutzdeckel 14, der nicht nur die Funktion des Staubschutzes hat, sondern ebenso den Austritt von überschüssigem Fett verhindert. Die Fertigung des äußeren Schutzdeckels 14 erfolgt am äußeren Durchmesser in einer Maßgenauigkeit Passung H6 zum Lagersitz des drehenden Körpers 1 oder zum Lagersitz des feststehenden Lagergehäuses 1b der Fig. 10a - 12b. Somit ist gewährleistet, dass das Nachschmieren in keinem Fall zur Verschmutzung der eigentlichen Produktions-Maschine führt, da durch diese Passgenauigkeit ein Austritt des Fettes durch Fliehkräfte verhindert wird. Der Schutzdeckel 14 ist mit einem randständigen axial einwärts vorspringenden Ansatz versehen (Figur 8 bzw. 9, Bezugszeichen 19), so dass nach der Montage der Lageranordnung eine Vorkammer 13 entsteht, in der sich überschüssiges Fett sammeln kann. Die Vorkammer ist so bemessen, dass bei ordnungsgemäß ausgeführter Schmierung, die ein Mal jährlich erfolgt, sechs Mal nachgeschmiert werden kann, bevor die Vorkammer voll ist. Die zentrale Durchgangsbohrung 18 des äußeren Schutzdeckels 14 ist 0,1 mm größer als der Außendurchmesser der Welle aus Vollmaterial bzw. Achse 2 oder drehenden Welle aus Vollmaterial oder Hohlwelle 2b.

Die Schmierbohrungen 11 bzw. 15 in der Achse können wahlweise axial oder radial als auch diagonal verlaufen. Die jeweilige Schmierbohrung ergibt sich aus Baugrößen und technischer Machbarkeit (Bezugszeichen 11, 15, 16, 17). Mehrfachlagerungen werden nach der jeweils zu berücksichtigenden Belastung und Drehzahl festgelegt. Eine Mehrfachlagerung wird durch ein oder mehrere zusätzliche Rillenkugellager 3a (Fig. 3a - Fig. 4b) und einen oder mehrere Sätze äußerer Distanz- und Abdeckringe 7 und innerer Distanz- und Schmierringe 8 erweitert.

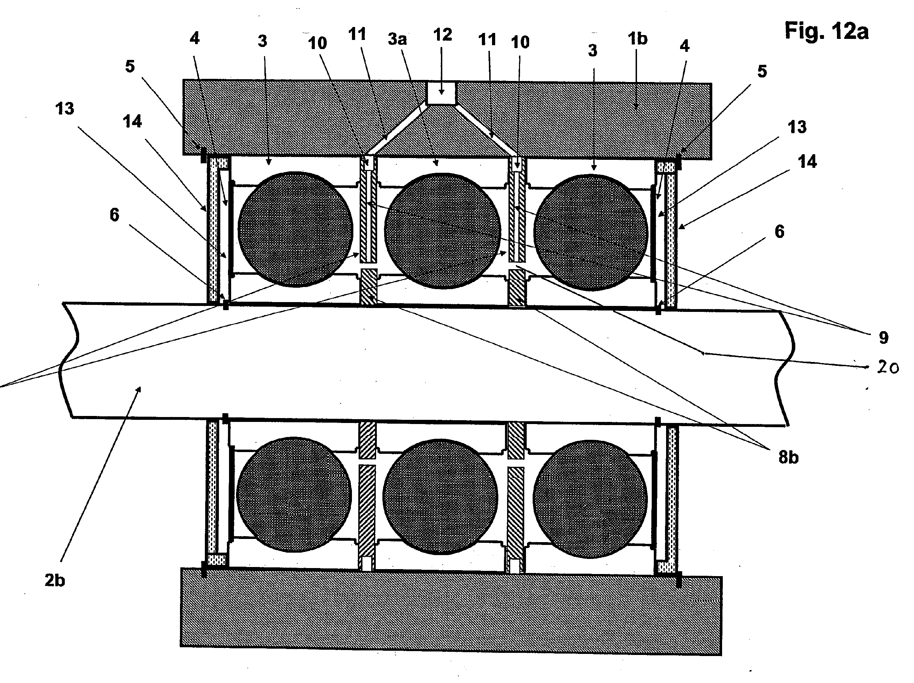

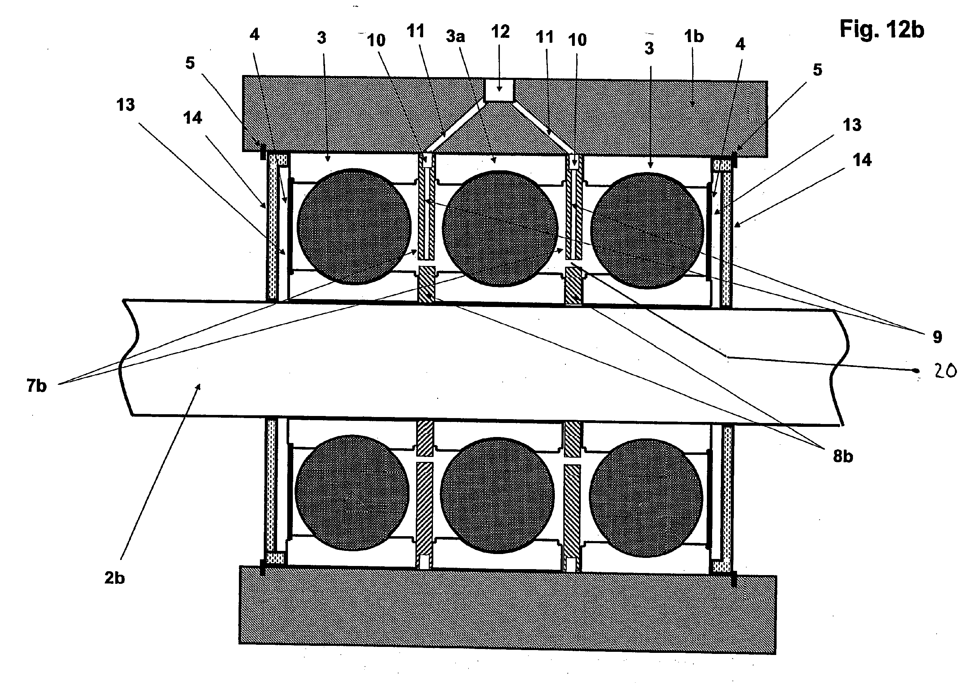

Im Fall eines feststehenden Lagergehäuses 1b und rotierender zentraler Welle 2b (siehe Fig. 10a - 10b) erfolgt die Schmierung von außen durch das Lagergehäuse hindurch. Hierbei gibt es folgende Möglichkeiten:
- Radiale Schmierbohrung 16, wie in Fig. 10a - 11b;
- Diagonale, d. h. zwei schräg verlaufende Schmierbohrungen 11 in Fig. 12a-12b;

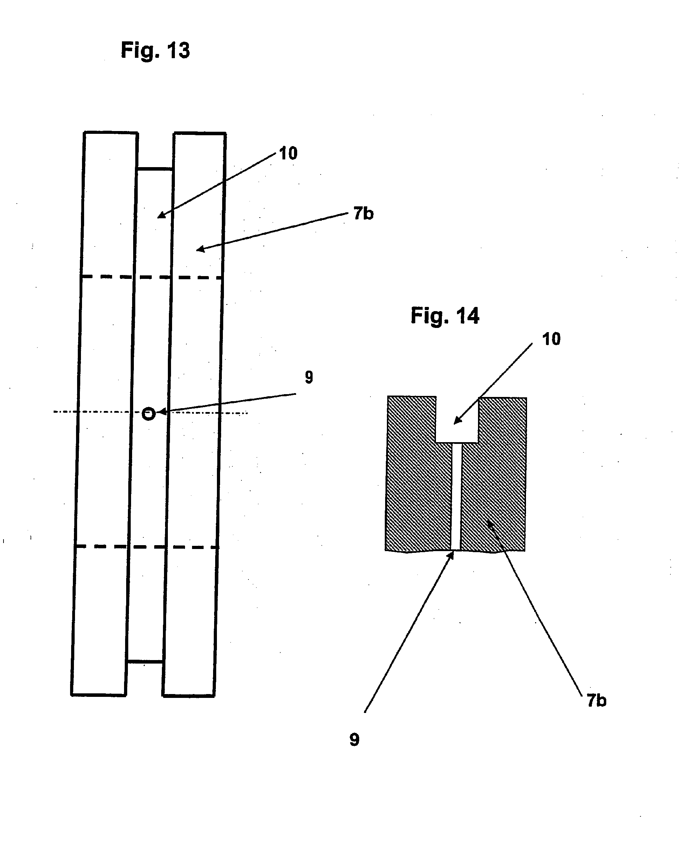

Eine weitere Änderung im Fall eines feststehenden äußeren Lagergehäuses ist, dass hierbei ein äußerer Distanz-, Schmier- und Abdeckring 7b (Figur 13 & 14) und ein innerer Distanzring 8b zum Einsatz kommt. Des weiteren muss bei einem feststehenden Lagergehäuse auf beiden Seiten ein äußerer Schutzdeckel 14 angebracht sein.

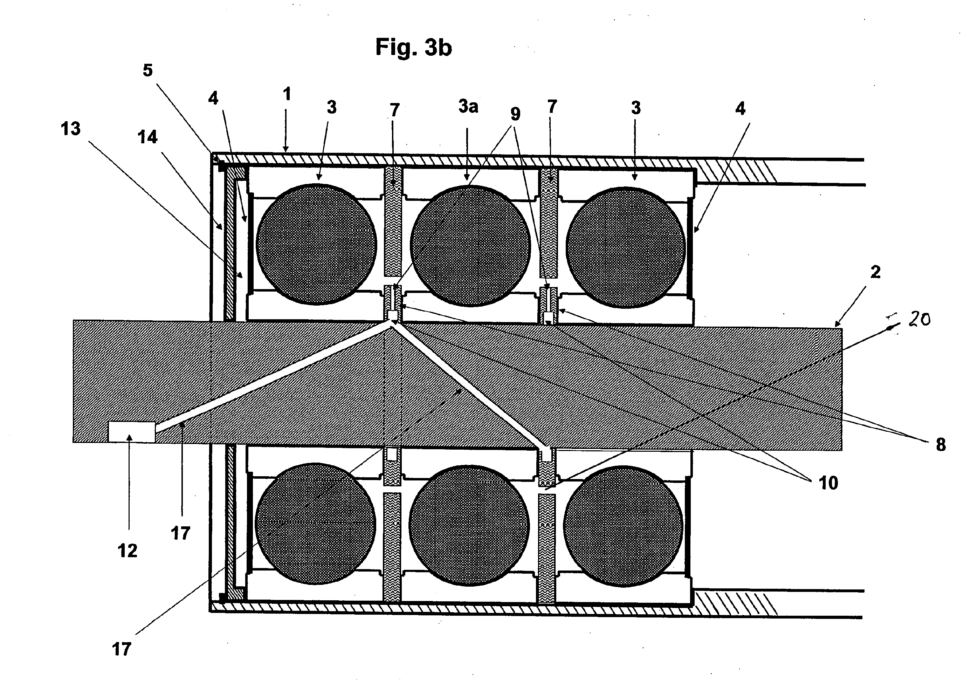

Grundsätzlich ist auch folgende Ausgestaltung der Schmierbohrungen möglich:
- Diagonale, d. h. schräg verlaufende am Schnittpunkt im Bereich einer Fettförderkammer 10 zusammentreffende Schmierbohrungen 17 wie in Fig. 3a und 3b gezeigt.

### Bezugszeichenliste

- 1: Drehender Körper (wie z. B. Walzenkörper oder ähnliches)
- 1 b: Feststehendes Lagergehäuse
- 2: Welle aus Vollmaterial, Achse
- 2 b: Drehende Welle aus Vollmaterial oder Hohlwelle
- 3: Rillenkugellager einseitig geschlossen
- 3 a: Rillenkugellager beidseitig offen
- 4: Lagerabdeckung (Ausführung Z das heißt berührungsfrei)
- 5: Seegering DIN 472
- 6: Seegering DIN 471
- 7: Äußerer Distanz- und Abdeckring
- 7 b: Äußerer Distanz-, Schmier- und Abdeckring
- 8: Innerer Distanz- und Schmierring
- 8 b: Innerer Distanzring
- 9: Durchlassbohrung
- 10: Fettförderkammer
- 11: Diagonale Schmierbohrung
- 12: Sitz des Schmiernippels
- 13: Vorkammer
- 14: Äußerer Schutzdeckel
- 15: Axiale Schmierbohrung
- 16: Radiale Schmierbohrung
- 17: Diagonale am Schnittpunkt zusammentreffende Schmierbohrungen
- 18: Durchgangsbohrung für Achse
- 19: Absatz
- 20: Ringspalt (zwischen 7, 7b bzw. 8, 8b)

## Patentansprüche

1. Nachschmierbare Mehrfach-Wälzlagerung mit mindestens zwei Reihen von Wälzlagerkörpern, die in einem Innenring und einem Außenring gelagert sind und zur Verwendung bei sich drehenden Körpern vorgesehen sind,
**gekennzeichnet durch**
mindestens zwei einreihige Standard-Wälzlager nebeneinander,
die voneinander axial getrennt sind **durch** separat hergestellte Drehteile in Gestalt eines äußeren und eines inneren Distanz- und Abdeckringes (7, 7b bzw. 8 bzw. 8b), von denen einer zusätzlich mit einer randständigen umlaufenden Fettförderkammer (10) in Gestalt einer Ausdrehung an einer Umfangsfläche davon ausgebildet ist,
wobei von der Fettförderkammer (10) ausgehend wenigstens eine radial zum Ringspalt (20) hin verlaufende Durchlassbohrung (9) vorgesehen ist.

2. Nachschmierbare Mehrfach-Wälzlagerung nach Anspruch 1, **dadurch gekennzeichnet, dass** die Fettförderkammer (10) im inneren Distanz- und Abdeckring angeordnet über axial und radial oder diagonal verlaufende Schmierbohrungen (15, 16, 17) vom Sitz des Schmieröls (12) in der Achse (2) ausgehend mit Fett versorgbar ist (Fig 1a, 1b; 2a, 2b; 3a, 3b; 4a, 4b).

3. Nachschmierbare Mehrfach-Wälzlagerung nach Anspruch 1, **dadurch gekennzeichnet, dass** die Fettförderkammer (10) im äußeren Distanz- und Abdeckring angeordnet über radial oder diagonal verlaufende Schmierbohrungen (11, 16) vom Sitz des Schmiernippels (12) im Lagergehäuse (16) ausgehend mit Fett versorgbar ist (Fig. 10a, 10b; 11a, 11b;12a, 12b).

4. Nachschmierbare Mehrfach-Wälzlagerung nach einem der voran - stehenden Ansprüche, **dadurch gekennzeichnet, dass** der Ringspalt (20) zwischen dem inneren und dem äußeren Distanz- und Abdeckring (7, 7b bzw. 8, 8b) nahe des inneren Laufringes der Wälzlager angeordnet ist.

5. Nachschmierbare Mehrfach-Wälzlagerung nach einem der voranstehenden Ansprüche, **gekennzeichnet durch** einen separaten Schutzdeckel (14) mit axialem, einwärts vorspringendem, radial außen vorgesehenen Absatz (19) zur Ausbildung einer Vorkammer (13) an dem einen oder an beiden axial Enden der Mehrfach-Wälzlagerung.
